# EUROPÄISCHE PATENTSCHRIFT

(11) **EP 0 762 335 B1**
(45) Veröffentlichungstag und Bekanntmachung des Hinweises auf die Patenterteilung: **04.06.2003**
(21) Anmeldenummer: 96250187.0
(22) Anmeldetag: 30.08.1996
(51) Int. Cl.: G07B 17/02

(54) **Verfahren zur Veränderung der in Speicherzellen geladenen Daten einer elektronischen Frankiermaschine**
Method for changing data charged in memory cells of an electronic franking machine
Procédé pour changer les données chargées dans des cellules de stockage d'une machine d'affranchissement

(30) Priorität: 08.09.1995 DE 19534528
(43) Veröffentlichungstag der Anmeldung: 12.03.1997
(73) Patentinhaber: Francotyp-Postalia AG & Co. KG, 16547 Birkenwerder (DE)
(72) Erfinder: Pilz, Joachim, 10787 Berlin (DE); Zarges, Olav A., 13353 Berlin (DE)

(56) Entgegenhaltungen:
- EP-A- 0 137 737
- EP-A- 0 457 940
- EP-A- 0 619 565
- US-A- 4 757 532

## Beschreibung

Die Erfindung betrifft ein Verfahren zur Veränderung der in Speicherzellen geladenen Daten einer elektronischen Frankiermaschine, nach der im Oberbegriff des Anspruchs 1 angegebenen Art. Dieses Verfahren verbessert die Zugänglichkeit zu einzelnen Bausteinen der Elektronik ohne Beeinträchtigung ihrer Sicherheit.

In einer aus der US 4 746 234 bekannten Frankiermaschine werden feste und variable Informationen in Speichermitteln (ROM, RAM) gespeichert. Wenn ein Brief auf dem Transportpfad vor der Druckposition einen Mikroschalter betätigt, werden diese Informationen mittels eines Mikroprozessors ausgelesen, um ein Drucksteuersignal zu bilden. Beide sind danach elektronisch zu einem Druckbild zusammengesetzt und können durch Thermotransferdruckmittel auf einen zu frankierenden Briefumschlag ausgedruckt werden.

Für derartige Frankiermaschinen, die einen vollelektronischen erzeugten Abdruck zum Frankieren von Postgut einschließlich Abdruck eines Werbeklischees liefern, muß im eingeschalteten Zustand ein nicht abgerechnetes gültiges Frankieren verhindert werden.

Bekannte Frankiermaschinen enthalten in mindestens einem Speicher drei relevante Postregister für verbrauchten Summenwert (steigendes Register), noch verfügbares Restguthaben (fallendes Register) und Register für eine Kontrollsumme. Die Kontrollsumme wird mit der Summe aus verbrauchten Summenwert und aus verfügbaren Guthaben verglichen. Bereits damit ist eine Überprüfung auf richtige Abrechnung möglich.

Grundsätzlich ist jede vorgenommene Frankierung abzurechnen und jede Manipulation, welche zu einer nichtabgerechneten Frankierung führt, muß verhindert werden.

Es ist bereits in der US 4,812,965 ein Ferninspektionssystem für Frankiermaschinen vorgeschlagen worden, welches auf speziellen Mitteilungen im Abdruck von Poststücken, die der Zentrale zugesandt werden müssen, oder auf einer Fernabfrage über MODEM basiert. Sensoren innerhalb der Frankiermaschine sollen jede vorgenommene Verfälschungshandlung detektieren, damit in zugehörigen Speichern ein Flag gesetzt werden kann, falls in die Frankiermaschine zu Manipulationszwecken eingegriffen wurde. Ein solcher Eingriff könnte erfolgen, um ein nicht bezahltes Guthaben in die Register zu laden.

Bei Feststellung einer Manipulation wird die Frankiermaschine während der Ferninspektion über Modem durch ein von der Datenzentrale ausgehendes Signal gesperrt. Eine geschickte Manipulation könnte aber andererseits darin bestehen, nach der Herstellung von nicht abgerechneten Frankieraufdrucken, das Flag und die Register in den ursprünglichen Zustand zurückzuversetzen. Eine solche Manipulation wäre über Ferninspektion durch die Datenzentrale nicht erkennbar, wenn diese rückgängig gemachte Manipulation vor der Ferninspektion lag. Auch der Empfang der Postkarte von der Datenzentrale, auf welche eine zu Inspektionszwecken vorzunehmende Frankierung erfolgen soll, gestattet dem Manipulator die Frankiermaschine in ausreichender Zeit in den ursprünglichen Zustand zurückzuversetzen. Damit ist also noch keine höhere Sicherheit erreichbar.

In der EP 660 269 wurden bereits Maßnahmen für eine höhere Manipulationssicherheit in Verbindung mit einem OTP-Prozessor (ONE TIME PROGRAMMABLE) vorgeschlagen, ohne daß eine besondere mechanische Kapselung der sicherheitsrelevanten Bauteile bzw. ein Sensor zur Erkennung des geöffneten Gehäuses erforderlich ist. Insbesondere wird ein OTP-Prozessor mit internen nichtflüchtigem Speicher (NV-RAM) vorgeschlagen. Die Datensicherheit kann erhöht werden, indem durch Überprüfungsroutinen eine Manipulation erkannt wird. Allerdings wird ein solcher spezieller OTP-Prozessor nur zu einem höheren Preis zu erwerben sein. Auch ein solcher spezieller OTP-Prozessor kann allein die Datensicherheit noch nicht gewährleisten, wenn nicht der gesamte benötigte Programmcode im internen OTP-ROM gespeichert vorliegt. Dies ist aber bei einem umfangreichen Programmcode nicht zu erwarten.

In der EP 660 269 wird noch von einer Frankiermaschine ausgegangen, die eine verschließbare und versiegelte Klappe hat, die den Zugriff auf die dahinter liegende Hardware (EPROM-Sockel) nur einem begrenzten speziell vertrauenswürdigen Personenkreis erlaubt. Hier konnte davon ausgegangen werden, daß durch diese Personen keine Manipulation der Frankiermaschine erfolgt.

Das bisherige Vorgehen bei der Grundeinstellung der Frankiermaschine im Fertigungsprozess sah vor, die Maschinenparameter durch eine Resetsoftware, die der Maschine durch ein Reset-EPROM zugänglich gemacht wurde und durch den maschineneigenen Prozessor abgearbeitet wurde, einzustellen. Dazu wurde das Reset-EPROM in den externen Klischee-Sockel eingesetzt, und die Funktionalität durch Betätigen der Vorgabetaste freigegeben.

Die Tatsache, daß durch das Betätigen der Vorgabetaste eine Programmverzweigung in den Codebereich des externen EPROM-Sockels erfolgt, macht eine Manipulation der Maschinensoftware durch fremde EPROMs möglich. Eine Manipulation durch den Endkunden würde hierbei zwar die Zerstörung des Postverschlusses erfordern, was den technisch befähigten Manipulator bei Betrugsabsicht jedoch kaum hindern kann, diesen Schritt durchzuführen, wenn er in den Besitz eines solchen Reset-EPROMs gelangt. Für die kundenspezifische Veränderung einiger Maschinenparameter, welche für die Vermietung von Frankiermaschinen unerläßlich sind, müßte der vertrauenswürdige Kreis an Personen stark erweitert werden, welche die Postklappe öffnen dürfen.

Diese Möglichkeit der Manipulation ist nicht tragbar, da neben der Veränderung von Registerständen auch das Auslesen der sonst geschützten OTP-eigenen Speicherzellen ermöglicht würde. Zudem würde die Postklappe, welche die Vorgabetaste und den externen EPROM-Sockel durch den Postverschluß vor nachweislich illegalem Zugriff schützt, legal einem größeren Personenkreis zugänglich. Damit besteht eine höhere Wahrscheinlichkeit einer unbemerkten Manipulation. Eine teilweise geöffnete Postklappe hätte andererseits den Vorteil, daß der Anwender Zugriff auf den Klischee-EPROM-Sockel hat und den Klischee-EPROM selbständig wechseln kann. Dadurch könnten beim Frankiermaschinenbenutzer Service-Kosten eingespart beziehungsweise auf das nötige Maß beschränkt werden. Dieser Sockel ist mit dem Mikroprozessorbus verbunden, das heißt eine Manipulation könnte so erfolgen, daß ein Manipulator ein manipuliertes Programm-EPROM einsetzt, das wie ein RESET-EPROM die Kontrolle über das Mikroprozessorsystem übernimmt und somit Geldwerte, Einträge oder Sicherheitseinträge in der Frankiermaschine gezielt verändert oder daß ein manipuliertes Klischee-EPROM einsetzt, daß veränderte Druckdaten des Wertstempels enthält (Ort des Absenders, Postleitzahl des Absenders) und eine Manipulation des Wertstempelabdruckes zur Folge hätte.

Wird nun aber eine Lösung für eine Frankiermaschine benötigt, die eine teilweise geöffnete Postklappe aufweist, mit der die Sicherheit dennoch aufrecht erhalten werden kann, müssen zusätzliche Maßnahmen für ein externes Speichermittel (RESET-EPROM beziehungsweise Service-EPROM) ergriffen werden, welches die in Speicherzellen geladenen Daten (beispielsweise in NVRAM's) einer elektronischen Frankiermaschine verändern kann.

Es war die Aufgabe zu lösen, die Nachteile des Standes der Technik zu überwinden und einen signifikanten Zuwachs an Sicherheit einer Frankiermaschine zu erreichen. Innerhalb der Frankiermaschine sollen die sicherheitsrelevanten Programmteile gespeichert werden, für diejenigen Funktionen, welche im Service-Mode ausgeführt werden sollen. Das Sicherheitsgehäuse soll durch ein Gehäuse ersetzt werden, welches die Zugänglichkeit auf einzelne Bausteine der Elektronik für den Servicetechniker verbessert. Dabei soll ein Prozessor ohne einen internen NV-RAM eingesetzt werden. Eine weitere Aufgabe ist es, die Sicherheit der Daten in der Frankiermaschine zu verbessern, die bei einer Aktion durch den Service-Techniker beziehungsweise Handwerker mittels einem externen Speichermittel geändert beziehungsweise eingegeben werden. Dabei sollen zukünftige Programmteile geladen werden, die das ursprüngliche Programm erweitern und im Service-Mode ausgeführt werden sollen.

Die Aufgabe wird mit den Merkmalen des Anspruchs 1 gelöst.

Die Erfindung betrifft ein Verfahren zur Veränderung der in Speicherzellen geladenen Daten einer elektronischen Frankiermaschine, mit einem Bus und mit einem Mikroprozessor in einer Steuereinheit der Frankiermaschine zur Ausführung von Schritten für eine Routine, welche von einem externen SPEICHER-MEDIUM gesteuert wird, mit Aufruf einer Prüf-Routine, welche in einem sicheren internen Bereich einer elektronischen Frankiermaschine abläuft, zur Feststellung der Gültigkeit von Daten basierend auf einem Authentifikationsverfahren, umfassend, ein
a1) Vorsehen eines Spezial-EPROM, welches einen Schlüssel für die Zugangsberechtigung aufweist und in einen zugehörigen EPROM-Sockel gesteckt wird, wobei spezielle Treiberschaltkreise (Buffer), welche zwischen Bus und EPROM-Sockel geschaltet sind, das Auslesen von frankiermaschineninternen Daten nach außen verhindern und wobei mit dem Spezial-EPROM über den EPROM-Sockel eine Datenstruktur von außen angelegt wird, welche unter der Wirkung eines entsprechenden in der Frankiermaschine gespeicherten Programms bzw. einer internen Interpreterroutine zur Veränderung des Frankiermaschinenzustandes beiträgt,
a2) Eintreten in einen Spezial-Modus nach einem Prüfen einer Zugangsberechtigung der elektronischen Frankiermaschine anhand eines im externen gesteckten entsprechend programmierten Nurlese-Speicherbaustein (EPROM) gespeicherten Zugangsschlüssels zum Eintreten in den Spezial-Modus, der eine Veränderung der in Speicherzellen der elektronischen Frankiermaschine geladenen Daten gestattet, wobei der entsprechend programmierte steckbare Nurlese-Speicherbaustein (EPROM) ein zu interpretierendes Programm enthält,
a3) Laden des zu interpretierenden Programmes aus externen gesteckten Nurlese-Speicherbaustein (EPROM) in die Frankiermaschine, zur Steuerung einer Routine in der elektronischen Frankiermaschine,
b) Aufrufen einer Prüf-Routine, welche in einem sicheren internen Bereich einer elektronischen Frankiermaschine abläuft, zur Feststellung der Gültigkeit des zu interpretierenden geladenen Programmes, welches Anweisungen und/oder Daten im vorbestimmten Speicherplatz enthält, wobei die Feststellung der Gültigkeit auf einem Authentifikationsverfahren basiert und
c) Veränderung von Daten in der Frankiermaschine bei Gültigkeit des mittels Authentifikationsverfahren überprüften zu interpretierenden geladenen Programmes, wobei nach einem Schritt zur Initialisierung einer Interpreterroutine die Schritte einer Interpreterroutine anlaufen, um die Daten in der Frankiermaschine zu verändern, wobei der Interpreter als eine spezielle Routine, die im frankiermaschineninternen Programmspeicher gespeichert ist, durch eine über den externen EPROM-Sockel von außen angelegte und in die Frankiermaschine kopierte Datenstruktur aktiviert wird, und mit den im frankiermaschineninternen Programmspeicher gespeicherten Betriebsprogrammteilen zusammenwirkt, um Daten zu interpretieren, indem auf der Kopie eine Plausibilitätsprüfung durchgeführt wird, wobei jeweils ein Zugangs-Schlüssel den Zugang zum entsprechenden Spezial-Modus ermöglicht und wobei die vorgenannte Datenstruktur Informationen umfaßt, die vom Interpreter verarbeitet werden und wobei der vorgenannten Prozessor Operationen ausführt, die sich ausschließlich im Codebereich des Betriebsprogrammes im frankiermaschineninternen Programmspeicher befinden, oder Verlassen der Prüf-Routine der Frankiermaschine, wenn das zu interpretierende geladenen Programm ungültig ist, und wobei Schritte ablaufen, zum Verhindern einer weiteren Programmausführung zur Manipulation bzw. einer von der elektronischen Frankiermaschine nach extern führenden Programmverzweigung.

Die Interpreter-Routine wird im bestehenden System einmal vor und das zweite Mal nach dem Programmteil der Händler-Funktionen ausgeführt. Dementsprechend werden die Daten/Programmbereiche, die zu diesem Zweck aus dem externen Speichermedium gelesen werden, als Prolog und Epilog bezeichnet.

Es ist vorgesehen, daß nach dem beispielsweise durch die Betätigung einer Vorgabetaste ausgelösten Start und nach dem Eintritt in den Spezial-Modus, der aufgrund einer Prüfung einer Zugangsberechtigung erfolgt, in einem Schritt zunächst ein Kopieren des Prologs bzw. Epilogs in den internen Datenbereich des internen OTP-RAM erfolgt, eine MAC-Prüfsumme im weiteren Schritt durch (DES)-Verschlüsselung einer (CRC)-Prüfsumme über den PROLOG- bzw. EPILOG-Codebereich gebildet wird und im folgendem Prüfschritt ein MAC-Vergleich mit der bei der Herstellung bzw. Programmierung des Spezial-EPROMS gebildeten und im Spezial-EPROM gespeicherten MAC-Prüfsumme über den PROLOG- bzw. EPILOG-Codebereich durchgeführt wird, sowie daß nach Schritten zur Durchführung der eine Plausibilitätsprüfung einschließenden Interpreterroutine ein weiterer Überprüfungsschritt vorgesehen ist, der die bei der Abarbeitung eines Programms auftretende Fehlerfälle bzw. Fälle, die zur Beendigung des Interpretationsvorgangs führen, feststellt oder zum weiteren Überprüfungsschritt zurückverzweigt, um weitere Befehle abzuarbeiten.

Die Erfindung geht vorzugsweise von einem Prozessor aus, der nur einmal programmiert werden kann (ONE TIME PROGRAMMABLE). Eine erhöhte Sicherheit kann beispielsweise mit einem maskenprogrammierten Mikroprozessor erreicht werden, der nach außen Ports und eine interne Busstruktur, ein internes ROM, ein internes RAM für sicherheitsrelevante Abläufe aufweist. In das interne Rom werden sicherheitsrelevante Daten und Routinen während der Herstellung eingebrannt.

Eine andere bevorzugte Variante geht von einer Frankiermaschine mit Mikroprozessor aus, in der der Mikroprozessor einen internen ROM enthält, der ein Auslesen des darin enthaltenen Programmcodes nicht erlaubt. Dies kann ein handelsüblicher OTP-Prozessor (ONE TIME PROGRAMMABLE) sein, den man nach dem Programmiervorgang durch setzen/brennen einer Auslesesperre in einen solchen Zustand versetzt.

Die Frankiermaschine kann auch mit einem OTP-Typ ausgerüstet werden, der ein Auslesen von sicherheitsrelevanten Daten und Programmen in verschlüsselter Form gestattet (Encryption-Table). Das hat den Vorteil, daß eine Kontrolle darüber möglich ist, ob die Daten ordnungsgemäß gespeichert wurden.

Die Erfindung ist auch für auf andere Weise gesicherte Mikroprozessorsysteme einsetzbar.

Die Erfindung hat den Vorteil, den Programmfluß, der durch die interne Betriebssoftware der Frankiermaschine vorgegeben ist, durch externe Speichermedien zu beeinflussen, wobei zu diesem Zweck keine Programmverzweigung der CPU in die Speicherbereiche des externen Speichermediums, und somit keine ungewollte Steuerung des Prozessors ermöglicht wird. Um die so in den Programmfluß durch externe Medien integrierbaren Programmabläufe von Manipulation zu schützen, sind Prolog und Epilog jeweils durch einen MAC gesichert.

Solange keine Programmverzweigung in externe Speichermittel stattfindet, besteht ein sicherer Schutz vor betrügerischer Manipulation. In vorteilhafter Weise wird mit den Programmteilen, die im internen OTP-ROM ausgeführt sind, auch ein Schutz auch von extern gespeicherten Programmteilen ermöglicht, die beispielsweise in einem EPROM gespeichert vorliegen.

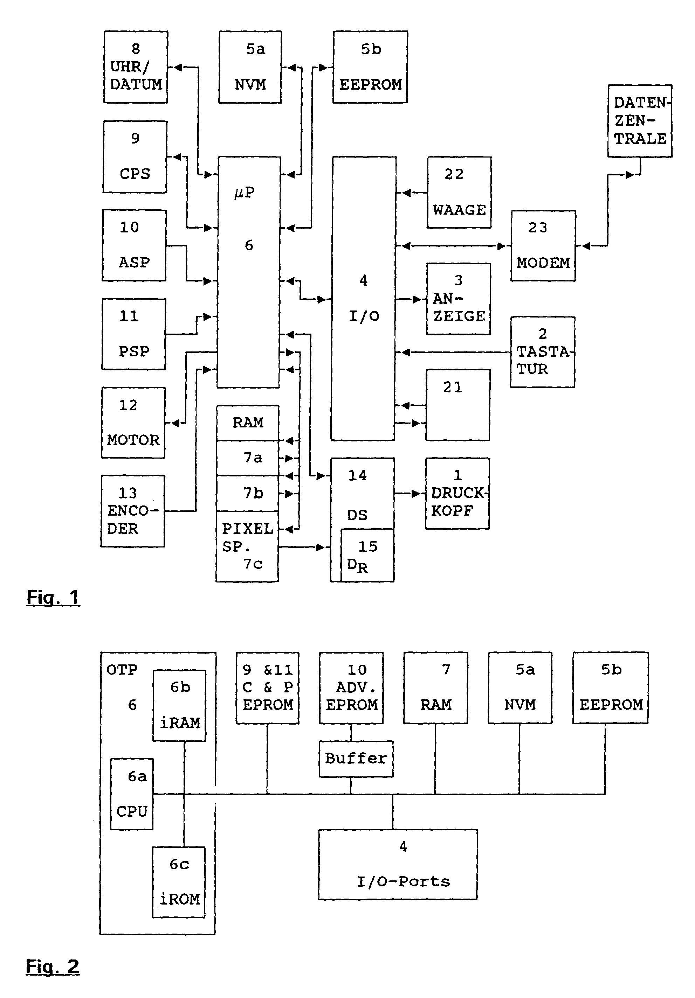

Hierbei ist als Vorteil zu erwähnen, daß das Klischee-EPROM nicht nur ausschließlich vom Servicetechniker, sondern auch problemlos von jeder anderen befugten Person in den Sockel gesteckt beziehungsweise ausgewechselt werden darf. Spezielle Treiberschaltkreise (Buffer), welche zwischen Bus und EPROM-Sockel geschaltet ist (Fig. 2), verhindern das Auslesen von frankiermaschineninternen Daten nach außen. Andererseits können Daten jederzeit über den Sockel in die Frankiermaschine eingegeben werden.

Das erfindungsgemäße Verfahren umfaßt die Schritte:
- Betätigen einer Vorgabetaste und Prüfen einer Zugangsberechtigung anhand eines im externen gesteckten Nurlese-Speicherbaustein (EPROM) gespeicherten Zugangsschlüssels zum Eintreten in den Spezial-Modus, und Laden des zu interpretierenden Programmes aus externen gesteckten Nurlese-Speicherbaustein (EPROM) in die Frankiermaschine,
- Bilden einer ersten MAC-Prüfsumme im Prozessor der elektronischen Frankiermaschine über einen ersten zu interpretierenden Inhalt (PROLOG) der Inhalte desjenigen externen Speichers, welchem ein erster MAC (MESSAGE AUTHENTIFICATION CODE) zugeordnet ist,
- Vergleich der in vorgenannter Weise gebildeten MAC-Prüfsumme im vorgenannten Prozessor mit dem im externen Speichermittel gespeicherten Wert des ersten MAC,
- Durchführung einer Verarbeitungs-Routine zur Verarbeitung des übertragenen ersten Speicherinhaltes (PROLOG) im vorgenannten Prozessor nach der Interpretation des geladenen zu interpretierenden Programms oder Verlassen der Prüf-Routine der Frankiermaschine, wenn die Daten ungültig sind und Schritte zum Verhindern einer weiteren Programmausführung zur Manipulation beziehungsweise einer vom vorgenannten Prozessor nach extern führenden Programmverzweigung,
- Durchführung von internen Händler-Routinen zum- Ändern von Daten in Speicherzellen der Frankiermaschine,
- Laden eines weiteren zu interpretierenden Programmes aus externen gesteckten Nurlese-Speicherbaustein (EPROM) in die Frankiermaschine,
- Bilden einer zweiten MAC-Prüfsumme im vorgenannten Prozessor über einen zweiten zu interpretierenden geladenen Inhalt (EPILOG) der Inhalte desjenigen externen Speichers, welchem ein zweiter MAC (MESSAGE AUTHENTIFICATION CODE) zugeordnet ist,
- Vergleich der in vorgenannter Weise gebildeten MAC-Prüfsumme im vorgenannten Prozessor mit dem im externen Speichermittel gespeicherten Wert des zweiten MAC,
- Durchführung einer Verarbeitungs-Routine zur Verarbeitung des übertragenen ersten Speicherinhaltes (EPILOG) im vorgenannten Prozessor bei Gleichheit der vorgenannten MAC's nach der Interpretation des geladenen zu interpretierenden Programms und Beenden der Verarbeitungsroutine EPILOG oder Verhindern der Durchführung der Prüf-Routine, wenn ein Fehler festgestellt wird.

Die geöffnete Serviceklappe gestattet mittels eines Spezial-EPROM's über den externen EPROM-Sockel eine Datenstruktur von außen anzulegen, welche beispielsweise nach Betätigung der mittels einer versiegelten Postklappe verdeckten und somit geschützten Vorgabetaste unter der Wirkung eines internen Interpreters zur Veränderung des Frankiermaschinenzustandes beiträgt.

Es ist vorgesehen, daß der Interpreter als eine spezielle Routine, die im frankiermaschineninternen Programmspeicher gespeichert ist, durch eine über den externen EPROM-Sockel von außen angelegte Datenstruktur aktiviert wird, und mit den im frankiermaschineninternen Programmspeicher gespeicherten Betriebsprogrammteilen zusammenwirkt, um Daten zu interpretieren. Jeweils ein Zugangsschlüssel ermöglicht den Zugang zum entsprechenden Spezial-Modus, wobei die vorgenannte Datenstruktur Informationen umfaßt, die vom Interpreter verarbeitet werden und wobei der vorgenannten Prozessor Operationen ausführt, die sich ausschließlich im Codebereich des Betriebsprogrammes im frankiermaschineninternen Programmspeicher befinden.

Interpreter-Routinen lassen sich prinzipiell auch im Händlermodus ausführen. Es ist vorgesehen, daß im externen Speichermedium mehrere Bereiche vorgesehen sind, welche zu interpretierende Code enthalten, wobei die einzelnen Bereiche mittels MAC abgesichert sind. Es ist ein Modus zur Abarbeitung von Servicefunktionen mit Ausführung von Interpreterroutinen innerhalb der Routinen für Servicefunktionen vorgesehen, wenn diese zu interpretierenden Code-Routinen über die Tastatur aufgerufen werden, wobei beim Betätigen einer auf einer Frankiermaschinentastatur befindlichen Taste der dieser Taste zugeordnete Bereich aus dem externen Speichermedium in die Frankiermaschine geladen, authentifiziert und, bei Übereinstimmung interpretiert wird oder anderenfalls, wenn kein zu interpretierender Code dieser Taste zugeordnet ist, daß dann mit der normalen Verarbeitung des Tastendrucks fortgefahren wird.

In weiterer Ausbildung ist das Verfahren gekennzeichnet durch die Schritte
- Übertragen eines extern gespeicherten vorbestimmten MAC-Wertes in den OTP-RAM zur flüchtigen Speicherung und ein Bilden einer ersten MAC-Prüfsumme im OTP-Prozessor über einen ersten (PROLOG) der Inhalte desjenigen Speichers, welchem ein erster MAC zugeordnet ist
- Eintritt in den Modus zur Abarbeitung von Servicefunktionen und Durchführen von Routinen für Servicefunktionen mit Interpreterroutinen sowie Beenden des Modus zur Abarbeitung von Servicefunktionen
- Übertragen eines extern gespeicherten vorbestimmten MAC-Wertes in den OTP-RAM zur flüchtigen Speicherung und ein Bilden einer zweiten MAC-Prüfsumme im OTP-Prozessor über einen zweiten (EPILOG) der Inhalte desjenigen Speichers, welchem ein zweiter MAC zugeordnet ist.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1,: Blockschaltbild einer Frankiermaschine,
- Figur 2,: Variante mit OTP in der Steuereinrichtung der Frankiermaschine,
- Figur 3,: Aufbau eines Datensatzes, welcher vom Interpreter verarbeitet werden kann,
- Figur 4,: Flußdiagramm für den schematischen Aufbau und den Datenfluß des Interpreters,
- Figur 5,: Ablaufdiagramm für die logische Einbettung des Interpreters in die interne Service-Funktionalität.
- Figur 6,: Ablaufdiagramm für einen Händlermodus mit Interpretation bei Tastenbetätigung,

In der Figur 1 ist ein Blockschaltbild einer elektronischen Frankiermaschine mit erfindungsgemäß erhöhter Sicherheit gezeigt. Die Erfindung basiert auf einer Frankiermaschine mit einem Mikroprozessor, der einen internen OTP-ROM enthält, der ein Auslesen des darin enthaltenen Programmcodes nicht erlaubt. Außerdem sind sicherheitsrelevante Daten im internen OTP-ROM gespeichert. Zur Verhinderung des Auslesens durch einen externen Eingriff können im Mikroprozessor entsprechende Sicherungsbits während der Herstellung der Frankiermaschine gesetzt werden. Dies kann ein handelsüblicher OTP-Prozessor sein, den man nach dem Programmiervorgang durch setzen/brennen einer Auslesesperre in einen solchen Zustand versetzt oder dies kann ein Mikroprozessor mit maskenprogrammierbarem ROM sein, der nach dem Herstellungsprozeß ein Auslesen des Programmcodes nicht mehr erlaubt oder nur ein Auslesen des Programmcodes und der Daten in verschlüsselter Form erlaubt.

Die Figur 1 zeigt ein Blockschaltbild der erfindungsgemäßen Frankiermaschine mit einem Druckermodul 1 für ein vollelektronisch erzeugtes Frankierbild, mit mindestens einem mehrere Betätigungselemente aufweisenden Eingabemittel 2, einer Anzeigeeinheit 3, einem die Kommunikation mit einer Datenzentrale herstellenden MODEM 23, weitere Eingabemittel 21 beziehungsweise Waage 22 welche über einen Ein/Ausgabe-Steuermodul 4 mit einer Steuereinrichtung 6 gekoppelt sind und mit nichtflüchtigen Speichern 5a, 5b bzw. 9, 10 und 11 für Daten beziehungsweise Programme, welche die variablen beziehungsweise die konstanten Teile des Frankierbildes einschließen.

Ein Charakterspeicher 9 liefert die nötigen Druckdaten für die variablen Teile des Frankierbildes zu einen flüchtigen Arbeitsspeicher 7. Die Steuereinrichtung 6 weist einen Mikroprozessor µP auf, der mit dem Ein/Ausgabe-Steuermodul 4, mit dem Charakterspeicher 9, mit dem flüchtigen Arbeitsspeicher 7 und mit nichtflüchtigen Arbeitsspeichern 5a, 5b, welche einen Kostenstellenspeicher umfassen, mit einem Programmspeicher 11, mit dem Motor einer Transport- beziehungsweise Vorschubvorrichtung gegebenenfalls mit Streifenauslösung 12, einem Encoder (Codierscheibe) 13 sowie mit einem Uhren/Datums-Baustein 8 in Verbindung steht. Die einzelnen Speicher können in mehreren physikalisch getrennten oder in nicht gezeigter Weise in wenigen Bausteinen zusammengefaßt verwirklicht sein. Derjenige Speicherbaustein, welcher den nichtflüchtigen Arbeitsspeicher 5b umfaßt, kann beispielsweise ein EEPROM sein, der durch mindestens eine zusätzliche Maßnahme, beispielsweise Aufkleben auf der Leiterplatte, Versiegeln oder Vergießen mit Epoxidharz, gegen Entnahme gesichert wird.

In der Figur 2 ist ein Detail des Blockschaltbildes der elektronischen Frankiermaschine für eine Variante mit OTP in der Steuereinrichtung gezeigt. Bei dieser prinzipiellen Anordnung in der Figur 2 können Sensoren und Aktoren, wie beispielsweise die in der Figur 1 dargestellten Encoder 13 und Motor 12 wahlweise direkt oder über I/O-Ports mit dem OTP verbunden sein.

Eine bevorzugte Variante eines Mikroprozessors ist ein 8051-Prozessor mit 16kByte On-Chip-EPROM (Philips 87C51FB) Ein solcher OTP-Typ (One Time Programmable) kann nicht durch UV-Licht gelöscht werden, weil dieser kein für UV-Lichtdurchtritt geeignetes Fenster aufweist. Deshalb kann ein OTP nur einmal programmiert werden. Der interne OTP-RAM hat einen Speicherbereich von 256 Byte.

Weiter geht die Erfindung davon aus, daß sicherheitsrelevante Daten und Programmteile, die im internen OTP-ROM gespeichert vorliegen, einen Interpreter umfassen.

Der Interpreter ist eine spezielle Routine, die im internen OTP-ROM gespeichert ist und durch eine über den externen EPROM-Sockel von außen angelegte Datenstruktur aktiviert wird, mit den im internen OTP-ROM gespeicherten Betriebsprogrammteilen zusammenwirkt, um Daten zu interpretieren.

Es ist vorgesehen, daß jeweils ein Zugangs-Schlüssel den Zugang zum entsprechenden Spezial-Modus ermöglicht, daß die vorgenannte Datenstruktur Informationen umfaßt, die vom Interpreter verarbeitet werden und daß die OTP-interne CPU Operationen ausführt, die sich ausschließlich im Codebereich des Betriebsprogrammes im internen OTP-ROM befinden.

Der Interpreter wurde in die Betriebssoftware integriert und verarbeitet definierte Datenstrukturen des externen EPROMs jeweils beim Beginn und Ende der Händler-Betriebsart. Damit wird erfindungsgemäß eine gezielte Modifikation von Speicherzellen der Maschine ermöglicht. Somit können durch eine Update des externen Service-EPROMs zusätzliche Operationen ausgeführt werden, ohne die Betriebssoftware selbst zu verändern und ohne die Übernahme der Programmkontrolle durch Verzweigung in den externen Codebereich zu gestatten.

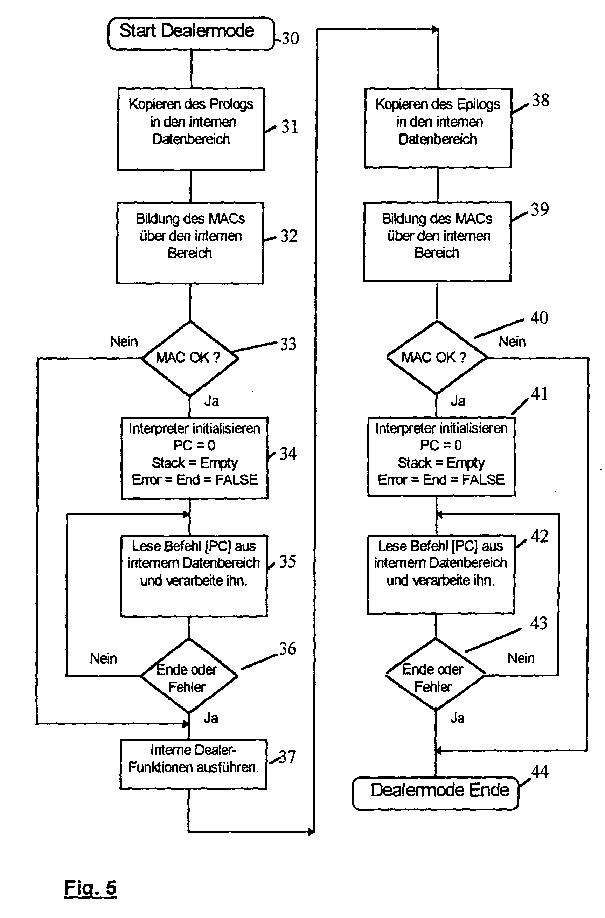

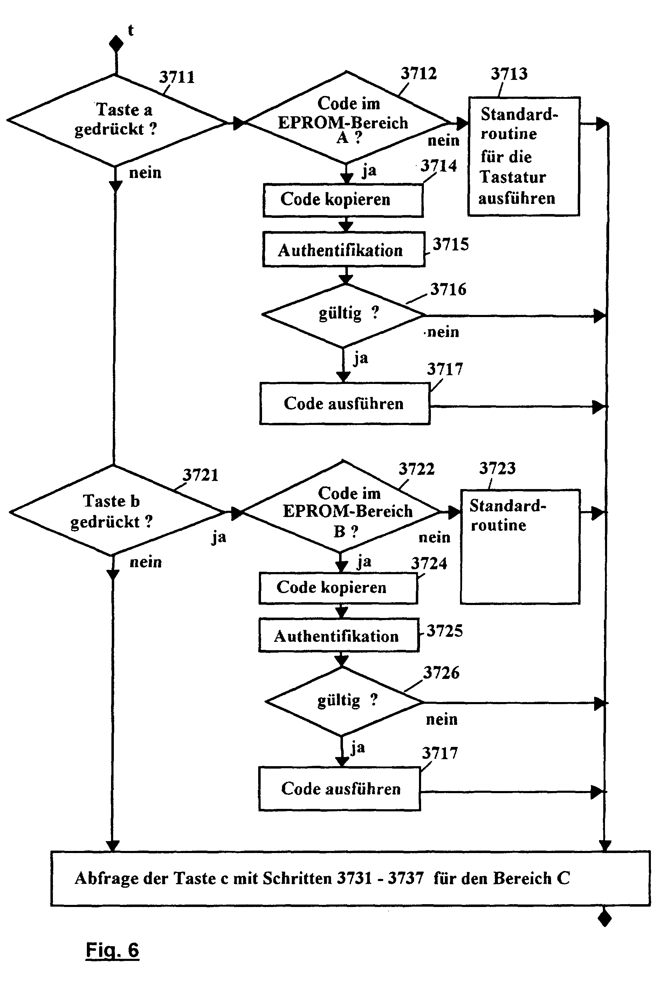

In einer weiteren - in der Figur 6 näher dargestellten - Variante schließt der im Händlermodus ausgeführte Schritt 35 (Fig.5) ebenfalls eine Abarbeitung von Interpreter-Routinen (Schritte 3717, 3727, 3737) ein. Dazu sind im externen Service-EPROM mehrere Bereiche A, B, C vorgesehen, welche zu interpretierenden Code enthalten, wobei die einzelnen Bereiche wieder mittels MAC abgesichert sind. Somit kann in die Frankiermaschine nachträglich eine Funktionalität eingebracht werden, die zuvor nicht vorhanden war. Für ein Verfahren zur Ausführung von Interpreterroutinen innerhalb der Routinen für Händlerfunktionen können diese zu interpretierenden Code-Routinen über die Tasten a, b, c der Tastatur 2 aufgerufen werden. So kann im externen Service-EPROM im Bereich A auch Platz für eine eigene Routine vorhanden sein, welche von einem Betätigungs- bzw. Eingabemittel, beispielsweise von einer auf der Frankiermaschinentastatur befindlichen Taste a aufgerufen wird. Das wird im Schritt 3711 überprüft und dann auf einen Überprüfungsschritt 3712 verzweigt, um bei betätigter Taste a zu überprüfen, ob ein entsprechender Code im EPROM-Bereich A existiert. Ist kein zu interpretierender Code vorhanden, so wird im Schritt 3713 mit der normalen Verarbeitung des Tastendrucks mit den Standardfunktionen fortgefahren, die innerhalb der Frankiermaschine gespeichert sind. Ansonsten wird der zu interpretierende Code aus dem externen Service-EPROM in die Frankiermaschine im Schritt 3714 geladen, im Schritt 3715 authentifiziert und bei im Schritt 3716 festgestellten Übereinstimmung im Schritt 3717 interpretiert. Eine fehlerhaft in der Maschine ablaufende Routine kann somit ersetzt oder ergänzt werden. Für eine Abfrage der Betätigung der Taste b oder c bzw. für eine Reaktion darauf sind entsprechende Schritte 3721 bis 3727 oder 3731 bis 3737 vorgesehen.

Erfindungsgemäß wurde die Software für den Händler- und Reset-Mode in das Innere (das heißt, in das interne EPROM und/oder interne OTP-ROM) der Maschine verlagert, so daß in diesen Betriebsarten keine Sprungverzweigung in den Codebereich des externen Speichers, mit welchem die Speicherzellen verändert werden können, erfolgt. Die weiterhin extern einzusetzenden Reset- und Service- oder Händler-EPROMs enthalten dazu jeweils einen 64 Bit Schlüssel, der erst den Zugang zu den entsprechenden Modi ermöglicht. Die CPU führt damit nur noch Operationen aus, die sich im Codebereich der Maschinensoftware befinden, die zusätzlich durch eine zyklische MAC-Prüfung vor Manipulation geschützt wird. Um die Funktionen der Reset-Betriebsart, die sich damit in jeder Maschine befinden, nicht zur Manipulation heranzuziehen, wurde die Funktionalität dieser Betriebsart derart begrenzt, daß keine Erhöhung der Geldbeträge oder eine Veränderung der Teleporto-Parameter ermöglicht wird.

Durch ein externes Speichermedium wird die Frankiermaschine in einen speziellen Betriebszustand versetzt, in welchem der Datenzustand von Speicherzellen verändert werden kann. Daten beziehungsweise Programmcode werden aus einem externen Speichermedium, das an die Frankiermaschine angeschlossen wird, durch den maschineninternen Mikroprozessor in einen Speicher der Frankiermaschine übertragen. Der Daten/Programmbereich enthält ein MAC, der den Bereich authentifiziert. Die Überprüfung der Gültigkeit wird durch den Mikroprozessor der Maschine auf der Kopie vorgenommen. Sind die Daten/Programmcode plausibel, so werden sie entweder direkt vom Mikroprozessor als Programmcode verarbeitet, oder durch eine Interpreter-Software, die den Mikroprozessor steuert, interpretiert. Nicht authentifizierbare Daten/Programmbereiche werden nicht weiter verarbeitet. Die Verarbeitung der externen zugeführten Informationen wird zum Verändern von maschineninternen Speicherzellen eingesetzt. Da die externen Daten/Programmbereiche nicht direkt vom Prozessor abgearbeitet werden, sondern immer die interne Kopie zugrunde gelegt wird, kann die CPU nicht durch externe, manipulierte Programmbereiche gesteuert werden.

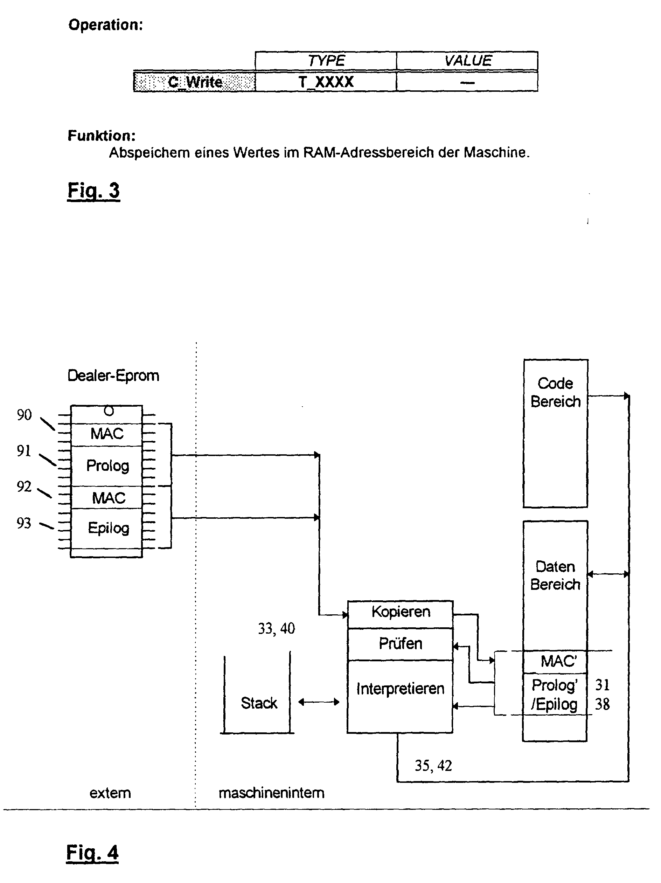

Die Funktion des Interpreters wird anhand der Figuren 3 bis 5 näher erläutert.

In der Figur 3 ist der Aufbau eines Datensatzes dargestellt, welcher vom Interpreter verarbeitet werden kann. Die Information, die vom Interpreter verarbeitet werden kann, wird von einer Reihe von Befehlen gebildet, welche grundsätzlich aus einem Datensatz mit drei Komponenten bestehen. Eine erste Komponente OPERATION kennzeichnet die durch den jeweiligen Befehl auszuführende Operation. Eine zweite Komponente TYP kennzeichnet den Typ des Wertes, welcher in einer dritten Komponente WERT angegeben worden ist.

Der TYP legt bei einigen Instruktionen fest, wie der Wert der Programmzeile beziehungsweise des Stacks oder des angesprochenen Speicherbereichs typisiert werden soll. Wird für die Instruktion keine Typangabe benötigt, so ist der Typ als T_None anzugeben.

Eine im Service-EPROM enthaltene interpretierbare Information besteht aus n Zeilen. Die Zeilen des Programms sind von 0 an aufsteigend numeriert und können dadurch für die Ausführung von Sprunganweisungen adressiert werden. Jede Programmzeile besitzt vorgenannte Struktur: OPERATION; TYP; WERT. Bei einer anderen Variante sind auch unäre Operatoren (kein TYP, kein WERT) zugelassen.

Die Befehle beziehen sich auf einen 12-stufigen Stack-Speicher und erlauben beispielsweise das Auslesen von Speicherzellen, die Ausführung von logischen und arithmetischen Operationen auf dem Stack sowie die Speicherung von Stackeinträgen in Speicherzellen der Maschine. Dabei können Code-, und sämtliche Datenspeicherzellen der Maschine adressiert werden. Zur Steuerung des Programmflusses während der Interpretation steht eine logische Vergleichsoperation mit den zugehörigen, bedingten und unbedingten Sprungbefehlen zur Verfügung.

Das in der Figur 4 dargestellte Flußdiagramm zeigt den schematischen Aufbau und den Datenfluß des Interpreters. Die interpretierbare Datenstruktur im externe EPROM muß natürlich durch entsprechende Maßnahmen vor eventuellen Manipulationen geschützt werden, da durch den Interpreter sämtliche Daten-Speicherbereiche der Maschine zugänglich und manipulierbar sind. Im Service-EPROM befinden sich zwei interpretierbare Speicherbereiche. Sie werden, im Bezug auf den Zeitpunkt ihrer Interpretation, als Prolog (Block 91) und Epilog (Block 93) bezeichnet. Jeder Bereich wird durch eine MAC-Prüfsumme (Block 90 und 92) gesichert. Bevor die Datenstruktur in den Schritten 35 und 42 verarbeitet wird, erstellt der Interpreter eine Kopie der Struktur und des MACs (Schritte 31 und 38) im internen RAM der Maschine und führt anschließend auf der Kopie eine Plausibilitätsprüfung (Schritte 33 und 40) durch. Das Arbeiten auf einer internen Kopie verhindert hierbei die externe Manipulation des Programms während dessen Interpretation.

Beim vorgenannten Arbeiten werden die im Prolog enthaltenen zu interpretierenden Codewörter schrittweise interpretiert, bis das Ende erreicht ist (oder ein Fehler aufgetreten ist). Grundsätzlich unterscheiden sich Prolog und Epilog lediglich durch den Zeitpunkt, zu dem sie ausgeführt werden. So können im Prolog Daten vor dem Start der maschineninternen Dealerroutine gerettet werden und im Epilog diese Daten im Anschluß daran wieder restauriert werden.

Das in der Figur 5 gezeigte Ablaufdiagramm zeigt die logische Einbettung des Interpreters in die interne Service- beziehungsweise Händler-Funktionalität.

Die Struktur im Service-EPROM wird durch eine Tabelle gebildet, in der jede Zeile aus den Komponenten Operation, Datentyp des Wertes bzw. der Operation sowie dem Wert besteht. Zusätzlich dem in der Figur 3 gezeigten Aufbau eines Datensatzes, welcher vom Interpreter verarbeitet werden kann, kann jede Zeile eine vierte Komponente zur Beschreibung des Befehls aufweisen. Die Tabelle wird zeilenweise vom Interpreter abgearbeitet. Dabei kann die Reihenfolge der Abarbeitung durch Sprungoperationen beeinflußt werden.

Nach dem Start im Schritt 30, der durch die Betätigung der Vorgabetaste ausgelöst wird, erfolgt im Schritt 31 ein Kopieren des Prologs in den internen Datenbereich des internen OTP-RAM. Eine MAC-Prüfsumme wird im Schritt 32 durch DES-Verschlüsselung der CRC-Prüfsumme über den Prolog-Codebereich gebildet. Bei der Herstellung bzw. Programmierung des EPROMs wurde bereits eine MAC-Prüfsumme über den Prolog-Codebereich gebildet und im EPROM gespeichert. Zur Authentifizierung der Daten im Prolog-Codebereich des eingesetzten externen EPROMs erfolgt im Schritt 33 ein Vergleich des im internen OTP-RAM flüchtig gespeicherten MAC's mit dem im externen Service-EPROM nichtflüchtig gespeicherten MAC. Bei einer Nichtübereinstimmung beider MAC's wird zum Schritt 37 verzweigt. Bei einer Übereinstimmung beider MAC's wird anderenfalls zum Schritt 34 verzweigt, um den Interpreter zu initialisieren. Im nachfolgenden Schritt 35 wird aus dem internen Datenbereich des internen OTP-ROM ein Befehl ausgelesen und verarbeitet. Im Schritt 36 wird geprüft, ob ein Fehler aufgetreten oder das Ende der Befehlsausführung erreicht worden ist. Bei einem Fehler oder am Ende der Befehlsausführung wird zum Schritt 37 verzweigt. Anderenfalls wird zum Schritt 35 zurückverzweigt.

Zunächst zeigt der Befehlszeiger auf das erste zu bearbeitende Codewort. In Schritt 35 werden die Codewörter nacheinander in ein Prozessorregister geladen. Zugelassene Codewörter werden dann bearbeitet, indem dafür eine spezielle Routine abgearbeitet wird. Nach jedem Codewort wird der Befehlszeiger erhöht. Benötigt ein Befehl auch Daten (z. B. das Ziel einer Verzweigung nach einem Vergleich oder eine Adresse), so werden diese ebenfalls geladen und der Befehlszeiger erhöht. Bestimmte zu interpretierende Codewörter dienen zum Verzweigen des Programmes; dann wird der Befehlszeiger an eine andere Stelle gesetzt und die Verarbeitung an dieser Stelle fortgesetzt. Tritt ein Fehler auf oder wird der Ende-Code erkannt, so wird die Verarbeitung beendet.

Im Schritt 37 werden interne Service- beziehungsweise Händler-Funktionen ausgeführt, welche im internen OTP-ROM als Programmcode gespeichert vorliegen. Darunter sind entsprechende Eingaben, beispielsweise über die Frankiermaschinentastatur oder vergleichbare Betätigungs- oder Eingabemittel, zu verstehen, welche zu tätigen sind, um beispielsweise:
- Kunden-Nummer zu wechseln
- neue PAN einzugeben
- Telefonnummer zu ändern
- Limit-Warnung zu ändern.

Vom Schritt 37 wird dann zum Schritt 38 weitervorangeschritten, um den Epilog entsprechend zu verarbeiten. Im Schritt 38 erfolgt in Kopieren des Epilogs in den internen Datenbereich des internen OTP-RAM. Eine MAC-Prüfsumme wird im Schritt 39 durch DES-Verschlüsselung der CRC-Prüfsumme über den Epilog-Codebereich gebildet. Bei der Herstellung beziehungsweise Programmierung des EPROMs wurde bereits eine MAC-Prüfsumme über den Epilog-Codebereich gebildet und im EPROM gespeichert. Zur Authentifizierung der Daten im Epilog-Codebereich des eingesetzten externen EPROMs erfolgt im Schritt 40 ein Vergleich des im internen OTP-RAM flüchtig gespeicherten MAC's mit dem im externen Service-EPROM nichtflüchtig gespeicherten MAC. Bei einer Nichtübereinstimmung beider MAC's wird zum Schritt 44 verzweigt. Bei einer Übereinstimmung beider MAC's wird anderenfalls zum Schritt 41 verzweigt, um den Interpreter zu initialisieren. Im nachfolgenden Schritt 42 wird aus dem internen Datenbereich des internen OTP-ROM ein Befehl ausgelesen und verarbeitet. Im Schritt 43 wird geprüft, ob ein Fehler aufgetreten oder das Ende der Befehlsausführung erreicht worden ist. Bei einem Fehler oder am Ende der Befehlsausführung wird zum Schritt 44 verzweigt. Anderenfalls wird zum Schritt 42 zurückverzweigt. Im Schritt 44 wird das Verfahren beendet.

Bei der Abarbeitung eines Programms können folgende Fehlerfälle auftreten, die zur Beendigung des Interpretationsvorgangs führen:
- Stackkapazität reicht nicht aus oder der Stack enthält nicht genügend Einträge für die geforderte Operation.
- Verletzung der Datentypbeschränkungen einer Operation
- Interpretation einer unbekannten Operation.
- Verlassen des Programmbereichs durch ein ungültiges Sprungziel.

Der Interpreter verfügt über einen begrenzten Stack (eingestellte Tiefe: 12 Einträge). Auf dem Stack werden die Werte als Struktur aus Long-Wert (32 Bit) und Datentyp abgelegt.

Eine auf derartigen Einstellungen beruhende Initialisierung der Frankiermaschine erfolgt vor dem Zusammenbau der Frankiermaschine mittels eines Reset- oder Master-EPROMs. Die Einstellung beispielsweise einer Seriennummer der Frankiermaschine oder einer Kundennummer oder andere Einstellungen können mittels eines Service-EPROMs jederzeit wiederholt vorgenommen werden. Beim Einsatz eines Service-EPROMs muß die Serviceklappe, die den EPROM-Sockel freigibt, geöffnet werden. In diesem Zustand mit eingestecktem Service-EPROM ist ein normaler Betrieb der Frankiermaschine nicht möglich. Nach dem Prüfen des entsprechenden 64-Bit-Zugangsschlüssels und der Authentizität der Daten durch die Prüf-Routine, wird die Zugangsberechtigung erteilt und das zugehörige Programm aufgerufen, um beispielsweise die Seriennummer zu verändern. Über die Tastatur 2, MODEM 23 oder weitere Eingabemittel 21 (beispielsweise Chipkarten-Lese/Schreibeinheit) der Frankiermaschine können Daten als eine Zahl beziehungsweise alphanumerische Zeichen eingegeben werden, welche in der Anzeigeeinheit 3 angezeigt werden, es erfolgen spezifische weitere Eingabeschritte, um die Maschinennummer zu löschen beziehungsweise neu einzugeben oder zu ändern.

Es können nicht nur Kundennummern oder andere Einstellungen vorgenommen werden, die im Zusammenhang mit dem Service oder Händler-Mode stehen. Prinzipiell können schwere Fehler anläßlich der nächsten Inspektion vor Ort von einer dazu berechtigten Person aufgehoben werden. Ein solcher Fehler, beispielsweise wenn der Prozessor nicht auf den Arbeitsspeicher zugreifen kann, das heißt, den Dateninhalt des RAM's weder lesen noch verändern kann, wird beispielsweise durch Stecken eines speziellen SERVICE-EPROMs beseitigt. Hierzu muß eventuell eine Verplombung der Postklappe zur Vorgabetaste beseitigt und die Serviceklappe zum externen EPROM-Sockel geöffnet werden. Die Frankiermaschine ist damit zumindest teilweise geöffnet und die Zugänglichkeit zu einzelnen Bausteinen der Elektronik von außen gewährleistet. Das SERVICE-EPROM enthält die erforderlichen Daten, beispielsweise den entsprechenden Schlüssel, und spezielle Programme zur Wiederherstellung der Frankiermaschinenfunktion. Beispielsweise kann ein solches Programm eine erfolgte Redundanzverringerung oder Fehlspeicherungen wieder rückgängig machen. Wird ein Unterprogramm aufgerufen, um beispielsweise die Werte in den Registern zu verändern, erfolgen spezifische weitere Eingabeschritte, um die Registereintragung zu löschen beziehungsweise neu einzugeben oder zu ändern.

Beispielsweise ergibt sich folgendes Scenario: Die Routine zur manuellen Eingabe der Portoabrufnummer, die sich in der internen Betriebssoftware der Maschine befindet, erweist sich im Feld als fehlerhaft, indem sie zum Beispiel die Seriennummer der Maschine fälschlicherweise überschreibt. Da sich diese Funktion im internen EPROM der Maschine befindet, kann sie nur durch ein Update der Betriebssoftware korrigiert werden, was das Öffnen der Maschine und das Wechseln des internen EPROMs sowie eventuell des OTP-Prozessors bedeutet. Abgesehen vom Aufwand sind dem Händler diese Arbeitsgänge aber auch nicht erlaubt.

Der integrierte Interpreter bietet nun folgende Möglichkeit an:
Der Maschinenentwickler sendet eine Update des Service-EPROMs an die Händler. Es enthält ein Prolog, der den Speicherinhalt der Seriennummer in einen freien, temporären Speicher der Maschine kopiert. Die Händlerfunktion zum Ändern der Portoabrufnummer zerstört zwar weiterhin die Seriennummer, diese kann jetzt jedoch durch einen entsprechenden Epilog, der beim Beenden der Händlerfunktionalitäten aufgerufen wird, aus der Kopie des Prologs wiederhergestellt werden.

Die Interpretation der Prolog- und Epilog-Datenstrukturen wird erfindungsgemäß eingesetzt für Prozessoren mit strikter Trennung von Programm und Datenspeicher.

Bei modernen Prozessoren ist diese Trennung nicht mehr vorhanden, so daß die Datenstruktur hierbei auch aus, vom Prozessor direkt verarbeitbaren Maschinenbefehlen gebildet werden können, die zunächst in die Maschine kopiert und, nach bestandener Prüfung, als Unterprogramm aufgerufen werden können. Damit wäre der Funktionsumfang nicht mehr auf die Operationen der Interpretersprache begrenzt, sondern würden den gesamten Leistungsumfang einer höheren Programmiersprache entsprechen.

## Patentansprüche

1. Verfahren zur Veränderung der in Speicherzellen geladenen Daten einer elektronischen Frankiermaschine, mit einem Bus und einem Mikroprozessor in einer Steuereinheit der Frankiermaschine zur Ausführung von Schritten für eine Routine, welche von einem externen Speichermedium gesteuert wird, mit Aufruf einer Prüf-Routine, welche in einem sicheren internen Bereich einer elektronischen Frankiermaschine abläuft, zur Feststellung der Gültigkeit von Daten basierend auf einem Authentifikationsverfahren,
**gekennzeichnet durch**
a1) Vorsehen eines Spezial-EPROM, welches einen Schlüssel für die Zugangsberechtigung aufweist und in einen zugehörigen EPROM-Sockel gesteckt wird, wobei spezielle Treiberschaltkreise, welche zwischen Bus und EPROM-Sockel geschaltet sind, das Auslesen von frankiermaschineninternen Daten nach außen verhindern und wobei mit dem Spezial-EPROM über den EPROM-Sockel eine Datenstruktur von außen angelegt wird, welche unter der Wirkung eines entsprechenden in der Frankiermaschine gespeicherten Programms bzw. einer internen Interpreterroutine zur Veränderung des Frankiermaschinenzustandes beiträgt,
a2) Eintreten in einen Spezial-Modus nach einem Prüfen einer Zugangsberechtigung der elektronischen Frankiermaschine anhand eines im externen gesteckten entsprechend programmierten Nurlese-Speicherbaustein gespeicherten Zugangsschlüssels zum Eintreten in den Spezial-Modus, der eine Veränderung der in Speicherzellen der elektronischen Frankiermaschine geladenen Daten gestattet, wobei der entsprechend programmierte steckbare Nurlese-Speicherbaustein ein zu interpretierendes Programm enthält,
a3) Laden des zu interpretierenden Programmes aus externen gesteckten Nurlese-Speicherbaustein in die Frankiermaschine, zur Steuerung einer Routine in der elektronischen Frankiermaschine,
b) Aufrufen einer Prüf-Routine, welche in einem sicheren internen Bereich einer elektronischen Frankiermaschine abläuft, zur Feststellung der Gültigkeit des zu interpretierenden geladenen Programmes, welches Anweisungen und/oder Daten im vorbestimmten Speicherplatz enthält, wobei die Feststellung der Gültigkeit auf einem Authentifikationsverfahren basiert und
c) Veränderung von Daten in der Frankiermaschine bei Gültigkeit des mittels Authentifikationsverfahren überprüften zu interpretierenden geladenen Programmes, wobei nach einem Schritt zur Initialisierung einer Interpreterroutine die Schritte einer Interpreterroutine anlaufen, um die Daten in der Frankiermaschine zu verändern, wobei der Interpreter als eine spezielle Routine, die im frankiermaschineninternen Programmspeicher gespeichert ist, **durch** eine über den externen EPROM-Sockel von außen angelegte und in die Frankiermaschine kopierte Datenstruktur aktiviert wird, und mit den im frankiermaschineninternen Programmspeicher gespeicherten Betriebsprogrammteilen zusammenwirkt, um Daten zu interpretieren, indem auf der Kopie eine Plausibilitätsprüfung durchgeführt wird, wobei jeweils ein Zugangs-Schlüssel den Zugang zum entsprechenden Spezial-Modus ermöglicht und wobei die vorgenannte Datenstruktur Informationen umfaßt, die vom Interpreter verarbeitet werden und wobei der vorgenannten Prozessor Operationen ausführt, die sich ausschließlich im Codebereich des Betriebsprogrammes im frankiermaschineninternen Programmspeicher befinden, oder Verlassen der Prüf-Routine der Frankiermaschine, wenn das zu interpretierende geladenen Programm ungültig ist, und wobei Schritte ablaufen, zum Verhindern einer weiteren Programmausführung zur Manipulation bzw. einer von der elektronischen Frankiermaschine nach extern führenden Programmverzweigung.

2. Verfahren nach Anspruch 1, **gekennzeichnet durch** die nach dem Eintritt in den Spezialmodus und dem Laden des zu interpretierenden Programmes ablaufenden Schritte:
- Bilden einer ersten MAC-Prüfsumme im Prozessor der elektronischen Frankiermaschine über einen ersten zu interpretierenden geladenen Inhalt (91) der Inhalte desjenigen externen Speichers, welchem ein erster MAC zugeordnet ist,
- Vergleich der in vorgenannter Weise gebildeten MAC-Prüfsumme im vorgenannten Prozessor mit dem im externen Speichermittel gespeicherten Wert des ersten MAC,
- Durchführung einer Verarbeitungs-Routine zur Verarbeitung des übertragenen ersten Speicherinhaltes (91) im vorgenannten Prozessor nach einer Interpretation des zu interpretierenden geladenen Programms oder Verlassen der Prüf-Routine der Frankiermaschine, wenn die Daten ungültig sind und Schritte zum Verhindern einer weiteren Programmausführung zur Manipulation bzw. einer vom vorgenannten Prozessor nach extern führenden Programmverzweigung,
- Durchführung von internen Händler-Routinen zum Ändern von Daten in Speicherzellen der Frankiermaschine,
- Laden eines weiteren zu interpretierenden Programmes aus externen gesteckten Nurlese-Speicherbaustein in die Frankiermaschine,
- Bilden einer zweiten MAC-Prüfsumme im vorgenannten Prozessor über einen zweiten zu interpretierenden geladenen Inhalt der Inhalte desjenigen externen Speichers, welchem ein zweiter MAC zugeordnet ist,
- Vergleich der in vorgenannter Weise gebildeten MAC-Prüfsumme im vorgenannten Prozessor mit dem im externen Speichermittel gespeicherten Wert des zweiten MAC,
- Durchführung einer Verarbeitungs-Routine zur Verarbeitung des übertragenen ersten Speicherinhaltes im vorgenannten Prozessor bei Gleichheit der vorgenannten MAC's nach einer Interpretation des zu interpretierenden geladenen Programms und Beenden der Verarbeitungsroutine EPILOG oder Verhindern der Durchführung der Prüf-Routine, wenn ein Fehler festgestellt wird.

3. Verfahren nach den Ansprüchen 1 bis 2, **dadurch gekennzeichnet, daß** die Information, die vom Interpreter verarbeitet werden kann, von einer Reihe von Befehlen gebildet wird, welche aus einem Datensatz mit drei Komponenten bestehen, wobei eine erste Komponente OPERATION, die durch den jeweiligen Befehl auszuführende Operation, eine zweite Komponente TYP, den Typ des Wertes, welcher in einer dritten Komponente WERT angegeben worden ist, kennzeichnet.

4. Verfahren nach den Ansprüchen 1 bis 3, **dadurch gekennzeichnet, daß** nach dem durch die Betätigung der Vorgabetaste ausgelösten Start (30) und nach dem Eintritt in den Spezial-Modus, der aufgrund einer Prüfung einer Zugangsberechtigung erfolgt, in einem Schritt (31 bzw. 38) ein Kopieren des Prologs bzw. Epilogs in den internen Datenbereich des internen OTP-RAM erfolgt, eine MAC-Prüfsumme im weiteren Schritt (32 bzw. 39) durch Verschlüsselung einer Prüfsumme über den PROLOG- bzw. EPILOG-Codebereich gebildet wird und im folgendem Prüfschritt (33 bzw. 40) ein MAC-Vergleich mit der bei der Herstellung bzw. Programmierung des Spezial-EPROMS gebildeten und im Spezial-EPROM gespeicherten MAC-Prüfsumme über den PROLOG- bzw. EPILOG-Codebereich durchgeführt wird, sowie daß nach Schritten (34, 35 bzw. 41, 42) zur Durchführung der eine Plausibilitätsprüfung einschließenden Interpreterroutine ein weiterer Überprüfungsschritt (36 bzw. 43) vorgesehen ist, der die bei der Abarbeitung eines Programms auftretende Fehlerfälle bzw. Fälle, die zur Beendigung des Interpre-tationsvorgangs führen, feststellt oder zum weiteren Überprüfungsschritt (36 bzw. 43) zurückverzweigt, um weitere Befehle abzuarbeiten.

5. Verfahren nach den Ansprüchen 1 bis 3, **gekennzeichnet durch** die Schritte
• Vorsehen mehrerer Bereiche im externen Speichermedium, welche zu interpretierende Code enthalten, wobei die einzelnen Bereiche mittels MAC abgesichert sind,
• Vorsehen eines Modus zur Abarbeitung von Servicefunktionen zur Durchführung von internen Händler-Routinen zum Ändern von Daten in Speicherzellen der Frankiermaschine,
• Ausführung von Interpreterroutinen innerhalb der Routinen für Servicefunktionen, wenn diese zu interpretierenden Code-Routinen über die Tastatur aufgerufen werden, wobei beim Betätigen einer auf einer Frankiermaschinentastatur befindlichen Taste der dieser Taste zugeordnete Bereich aus dem externen Speichermedium in die Frankiermaschine geladen, authentifiziert und, bei Übereinstimmung interpretiert wird oder anderenfalls, wenn kein zu interpretierender Code dieser Taste zugeordnet ist, daß dann mit der normalen Verarbeitung des Tastendrucks fortgefahren wird.

6. Verfahren nach Anspruch 5, **gekennzeichnet durch** die Schritte
• Übertragen eines extern gespeicherten vorbestimmten MAC-Wertes in den OTP-RAM zur flüchtigen Speicherung und ein Bilden einer ersten MAC-Prüfsumme im OTP-Prozessor über einen ersten der Inhalte desjenigen Speichers, welchem ein erster MAC zugeordnet ist,
• Eintritt in den Modus zur Abarbeitung von Servicefunktionen und Durchführen von Routinen für Servicefunktionen mit Interpreterroutinen sowie Beenden des Modus zur Abarbeitung von Servicefunktionen,
• Übertragen eines extern gespeicherten vorbestimmten MAC-Wertes in den OTP-RAM zur flüchtigen Speicherung und ein Bilden einer zweiten MAC-Prüfsumme im OTP-Prozessor über einen zweiten der Inhalte desjenigen Speichers, welchem ein zweiter MAC zugeordnet ist.

7. Verfahren, nach den Ansprüchen 1 bis 6, **dadurch gekennzeichnet, daß** die Vorgabetaste mittels einer Postklappe geschützt ist, welche zum Betätigen der Vorgabetaste geöffnet wird, um in den Spezial-Modus einzutreten.

8. Verfahren, nach den Ansprüchen 1 bis 7, **dadurch gekennzeichnet, daß** der Interpreter als eine spezielle Routine, die im internen OTP-ROM gespeichert ist, durch eine über den externen EPROM-Sockel von außen angelegte Datenstruktur aktiviert wird, und mit den im internen OTP-ROM gespeicherten Betriebsprogrammteilen zusammenwirkt, um Daten zu interpretieren, wobei jeweils ein Zugangs-Schlüssel den Zugang zum entsprechenden Spezial-Modus ermöglicht und wobei die vorgenannte Datenstruktur Informationen umfaßt, die vom Interpreter verarbeitet werden und wobei die OTP-interne CPU Operationen ausführt, die sich ausschließlich im Codebereich des Betriebsprogrammes im internen OTP-ROM befinden.

## Claims

1. A method for changing the data of an electronic franking machine loaded in memory cells, with a bus and a microprocessor in a control unit of the franking machine for the execution of steps for a routine that is controlled by an external storage medium, with call of a check routine running in a secure internal area of an electronic franking machine for verifying the validity of data based on an authentication procedure,
**characterized by**
a1) the provision of a special EPROM that contains a key for the access authorization and is plugged into an appertaining EPROM socket, wherein special driver circuits connected between bus and EPROM socket prevent a readout of internal data of the franking machine to the outside and wherein, by means of the special EPROM, a data structure is created from the outside via the EPROM socket that, under the effect of a respective program stored in the franking machine or an internal interpreter routine, contributes to a change in the state of the franking machine;
a2) entry into a special mode after checking an access authorization of the electronic franking machine on the basis of an access key stored in a respectively programmed external plugged-in read-only memory for entering into the special mode that allows for an alteration of the data loaded in the memory cells of the electronic franking machine, the respectively programmed plug-in read-only memory containing a program to be interpreted;
a3) loading of the program to be interpreted from the external plugged-in read-only memory into the franking machine for controlling a routine in the electronic franking machine;
b) calling of a check routine that runs in a secure internal area of an electronic franking machine for verifying the validity of the loaded program to be interpreted that contains instructions and/or data in the defined memory locations, the verification of the validity being based on an authentication procedure; and
c) alteration of data in the electronic franking machine in case of validity of the loaded program to be interpreted verified by means of an authentication procedure, wherein, following a step for initializing an interpreter routine, the steps of an interpreter routine start in order to alter the data in the franking machine, wherein the interpreter, as a special routine stored in the internal program memory of the franking machine, is activated by a data structure created from the outside via the external EPROM socket and copied into the franking machine and interacts with the operating system components stored in the internal program memory of the franking machine in order to interpret data by means of performing a plausibility check in the copy, wherein always one access key permits access to the respective special mode and wherein the above-mentioned data structure contains information that is processed by the interpreter and wherein the above-mentioned processor executes operations that are exclusively located in the code area of the operating system in the internal program memory of the franking machine; or leaving of the check routine of the franking machine if the loaded program to be interpreted is invalid, steps being executed for avoiding a further program execution for manipulation or a program branch leading from the electronic franking machine to the outside.

2. A method according to claim 1, **characterized** b y the steps running after entry into the special mode and loading of the program to be interpreted:
- forming of a first MAC checksum in the processor of the electronic franking machine of a first loaded content (91) to be interpreted out of the contents of the external memory that a first MAC is assigned to;
- comparison, in the above-mentioned processor, of the MAC checksum formed in the above manner with the value of the first MAC stored in the external memory;
- execution of a processing routine for processing the transmitted first memory content (91) in the above-mentioned processor after interpretation of the loaded program to be interpreted or leaving of the check routine of the franking machine if the data are invalid and execution of steps for avoiding a further program execution for manipulation or a program branch leading from the above-mentioned processor to the outside.
- execution of internal dealer routines for altering data in memory cells of the franking machine;
- loading of a further program to be interpreted form a plugged-in external read-only memory into the flanking machine;
- forming of a second MAC checksum in the above-mentioned processor of a second loaded content to be interpreted out of the contents of the external memory that a second MAC is assigned to;
- comparison, in the above-mentioned processor, of the MAC checksum formed in the above manner with the value of the second MAC stored in the external memory;
- execution of a processing routine for processing the transmitted first memory content in the above-mentioned processor in case of equality of the above-mentioned MACs after interpretation of the loaded program to be interpreted and termination of the EPILOG processing routine or prevention of the execution of the check routine if an error is detected.

3. A method according to claims 1 and 2, **characterized in that** the information that can be processed by the interpreter is formed by a number of instructions consisting of a data record with three components of which a first component OPERATION indicates the operation to be executed by the respective instruction, a second component TYP indicates the type of the value that is indicated in the third component WERT.

4. A method according to claims 1 to 3, **characterized in that**, after the start (30) triggered by operating the default button and after the entry into the special mode made on the basis of the verification of an access authorization, the Prolog or Epilog is copied into the internal data area of the internal OTP RAM in a step (31 or 38); a MAC checksum is formed by encoding a checksum of the PROLOG or EPILOG code area in a further step (32 or 39); and that, in a following verification step (33 of 40), there is performed a MAC comparison with the MAC checksum of the PROLOG or EPILOG code area formed during the manufacturing or programming of the special EPROM and stored in the special EPROM; and that, following steps (34, 35 or 41, 42) for the performance of the interpreter routine including a plausibility check, there is provided a further verification step (36 or 43) that detects error cases occurring during the execution of a program or cases leading to a termination of the interpretation process or branches back to the further verification step (36 or 43) in order to execute further instructions.

5. A method according to claims 1 to 3, **characterized by** the steps
■ provision of several areas in the external storage medium that contain codes to be interpreted, the individual areas being protected by means of MAC;
■ provision of a module for the execution of service functions for the performance of internal dealer routines for the alteration of data in the memory cells of the flanking machine;
■ Execution of interpreter routines within the routines for service functions when these code routines to be interpreted are called by means of the keyboard, wherein, upon operating a key located on the keyboard of a franking machine, the area assigned to that key is loaded out of the external storage medium into the franking machine, authenticated and, in case of conformity, interpreted or otherwise, if no code to be interpreted is assigned to that key, the normal processing of the key operation is continued.

6. A method according to claim 5, **characterized b y** the steps
■ transmission of an externally stored pre-defined MAC value into the OTP RAM for volatile storage and forming of a first MAC checksum in the OTP processor of the contents of the memory that a first MAC is assigned to;
■ entry into the service functions execution mode and execution of routines for service functions with interpreter routines as well as termination of the service functions execution mode;
■ transmission of an externally stored pre-defined MAC value into the OTP RAM for volatile storage and forming of a second MAC checksum in the OTP processor of the contents of the memory that a second MAC is assigned to.

7. A method according to claims 1 to 6, **characterized in that** the default key is protected by means of a mail flap that is opened for operating the default key in order to enter into the special mode.

8. A method according to claims 1 to 7, **characterized in that** the interpreter, as a special routine stored in the internal OTP ROM, is activated by a data structure applied from the outside via the external EPROM socket and interacts with operating system parts stored in the internal OTP ROM in order to interpret data, wherein always one access key enables the access to the respective special mode and wherein the above-mentioned data structure comprises information that is processed by the interpreter and wherein the internal OTP CPU executes operations exclusively located in the code area of the operating system in the internal OTP ROM.

## Revendications

1. Procédé destiné à la modification des données chargées dans des cellules de mémoire d'une machine à affranchir électronique, comportant un bus et un microprocesseur dans une unité de commande de la machine à affranchir pour l'exécution d'étapes pour une routine qui est commandée par un médium de mémoire externe, comportant l'appel d'une routine de contrôle qui se déroule dans une zone interne sûre d'une machine à affranchir électronique, pour constater la validité de données se basant sur un procédé d'authentification,
**caractérisé par**
a1) la prévision d'un EPROM spécial qui présente une clé pour l'autorisation d'accès et est fichée dans un socle EPROM correspondant, des circuits d'excitation spéciaux, qui sont montés entre le bus et le socle EPROM, empêchant la lecture de l'extérieur de données internes à la machine à affranchir et une structure de données étant appliquée de l'extérieur, avec l'EPROM spécial via le socle EPROM, structure qui contribue, sous l'effet d'un programme correspondant mémorisé dans la machine à affranchir ou d'une routine d'interprétateur interne, à la modification de l'état de la machine à affranchir,
a2) l'entrée dans un mode spécial après un contrôle d'une autorisation d'accès de la machine à affranchir électronique au moyen d'une clé d'accès mémorisé dans le module de mémoire de lecture seule externe enfiché programmé en conséquence pour entrer dans le mode spécial qui permet une modification des données chargées dans des cellules de mémoire de la machine à affranchir, le module de mémoire de lecture seule enfichable programmé en conséquence contenant un programme à interpréter,
a3) le chargement du programme à interpréter du module de mémoire de lecture seule externe enfiché dans la machine à affranchir, pour la commande d'une routine dans la machine à affranchir électronique,
b) l'appel d'une routine de contrôle qui se déroule dans une zone interne sûre d'une machine à affranchir électronique, pour constater la validité du programme chargé à interpréter qui contient des instructions et/ou données dans une place de mémoire prédéfinie, la constatation de la validité se basant sur un procédé d'authentification et
c) la modification de données dans la machine à affranchir en cas de validité du programme chargé à interpréter vérifié au moyen du procédé d'authentification, après une étape pour l'initialisation d'une routine d'interpréteur, les étapes d'une routine d'interpréteur démarrant afin de modifier les données dans la machine à affranchir, l'interprétateur étant activé comme une routine spéciale, qui est appliquée dans la mémoire de programme interne à la machine à affranchir, par une structure de données mémorisée de l'extérieur via le socle EPROM externe et copiée dans la machine à affranchir, et coopérant avec les parties de programme d'exploitation mémorisées dans la mémoire de programme interne à la machine à affranchir pour interpréter des données, en exécutant sur la copie un examen de plausibilité, une clé d'accès permettant respectivement l'accès au mode spécial correspondant et la structure de données susnommée comprenant des informations qui sont traitées par l'interprétateur et le processus susnommé réalisant des opérations qui se trouvent exclusivement dans la zone de codification du programme d'exploitation dans la mémoire de programme interne à la machine à affranchir, ou abandon de la routine de contrôle de la machine à affranchir si le programme chargé à interpréter est non valable, et des étapes se déroulant pour empêcher une autre exécution du programme pour la manipulation ou une ramification de programme conduisant de la machine à affranchir électrique vers l'extérieur.

2. Procédé selon la revendication 1, **caractérisé par** les étapes se déroulant après l'entrée dans le mode spécial et le chargement du programme à interpréter:
- formation d'une première somme de contrôle MAC dans le processeur de la machine à affranchir électronique via un premier contenu (91) chargé à interpréter des contenus de la mémoire externe à laquelle est affecté un premier MAC,
- comparaison de la somme de contrôle MAC formée de la manière susnommée dans le processeur susnommé avec la valeur du premier MAC mémorisée dans le moyen de mémoire externe,
- réalisation d'une routine de traitement pour le traitement du premier contenu de mémoire (91) transmis dans le processeur susnommé après une interprétation du programme chargé à interpréter ou abandon de la routine de contrôle de la machine à affranchir si les données sont non valables et des étapes pour empêcher une autre exécution de programme pour la manipulation ou ramification de programme conduisant du processeur susnommé vers l'extérieur,
- réalisation de routines de commerçant internes pour modifier des données dans des cellules de mémoire de la machine à affranchir,
- chargement d'un autre programme à interpréter d'un module de mémoire de lecture seule externe enfiché dans la machine à affranchir,
- formation d'une deuxième somme de contrôle MAC dans le processeur susnommé via un deuxième contenu chargé à interpréter des contenus de la mémoire externe à laquelle est affecté un deuxième MAC,
- comparaison de la somme de contrôle MAC formée de la manière susnommée dans le processeur susnommé avec la valeur du deuxième MAC mémorisée dans le moyen de mémoire externe,
- réalisation d'une routine de traitement pour le traitement du premier contenu de mémoire transmis dans le processeur en cas d'égalité des MAC susnommés après une interprétation du programme chargé à interpréter et achèvement de la routine de traitement EPILOG ou empêchement de la réalisation de la routine de contrôle si une erreur est constatée.

3. Procédé selon les revendications 1 à 2, **caractérisé en ce que** l'information qui peut être traitée par l'interprétateur est formée par une série d'ordres qui se composent d'un enregistrement de données avec trois composantes, une première composante caractérisant l'OPERATION, l'opération à exécuter par l'ordre respectif, une deuxième composante caractérisant le TYPE, le type de la valeur qui a été indiquée dans la troisième composante VALEUR.

4. Procédé selon les revendications 1 à 3, **caractérisé en ce que,** après le démarrage (39) déclenché par l'actionnement de la touche préaffectée et après l'entrée dans le mode spécial, qui a lieu en raison d'un contrôle d'une autorisation d'accès, dans une étape (31 resp. 38) une copie du prologue respectivement épilogue a lieu dans la zone de données interne de l'OTP-RAM interne, une somme de contrôle MAC est formée, dans une autre étape (32 resp. 39), par codification d'une somme de contrôle via la zone de codification PROLOGUE ou EPILOGUE et, dans l'étape suivante (33 resp. 40), une comparaison de MAC est réalisée avec la somme de contrôle formée lors de la fabrication ou programmation de l'EPROM spécial et mémorisée dans l'EPROM spécial via la zone de codification du PROLOGUE ou EPILOGUE et **en ce que**, après des étapes (34, 35 resp. 41, 42) pour la réalisation d'une routine d'interprétateur incluant un contrôle de plausibilité, une autre étape de vérification (36 resp. 43) est prévue qui constate les cas erronés survenant lors de l'exécution d'un programme ou les cas qui conduisent à l'achèvement de l'opération d'interprétation, ou renvoie à l'autre étape de vérification (36 resp. 43) afin d'exécuter d'autres ordres.

5. Procédé selon les revendications 1 à 3, **caractérisé par** les étapes
• prévision de plusieurs zones dans le médium de mémoire externe qui contiennent des codes à interpréter, les différentes zones étant sécurisées au moyen du MAC,
• prévision d'un mode pour l'exécution des fonctions de service pour la réalisation de routines de commerçant internes pour modifier des données dans des cellules de mémoire de la machine à affranchir,
• réalisation de routines d'interprétateur à l'intérieur des routines pour des fonctions de service si celles-ci sont appelées via le clavier pour des routines de code à interpréter, lors de l'actionnement d'une touche se trouvant sur un clavier de la machine à affranchir, la zone affectée à cette touche provenant du médium de mémoire externe étant chargée dans la machine à affranchir, authentifiée et, en cas de concordance, interprétée ou dans le cas contraire, si aucun code à interpréter n'est affecté à cette touche, que l'on poursuive avec le traitement normal de la pression de touche.

6. Procédé selon la revendication 5, **caractérisé par** les étapes
• transmission d'une valeur MAC prédéfinie mémorisée en externe dans l'OTP-RAM pour la mémorisation volatile et une formation d'une première somme de contrôle MAC dans le processeur OTP via un premier des contenus de la mémoire à laquelle est affecté un premier MAC,
• entrée dans le mode pour l'exécution de fonctions de service et réalisation de routines pour des fonctions de service avec des routines d'interprétateur ainsi qu'achèvement du module pour l'exécution de fonctions de service,
• transmission d'une valeur MAC prédéfinie mémorisée en externe dans l'OTP-RAM pour la mémorisation volatile et une formation d'une deuxième somme MAC dans le processeur OTP via un deuxième des contenus de la mémoire à laquelle est affecté un deuxième MAC.

7. Procédé selon les revendications 1 à 6, **caractérisé en ce que** la touche préaffectée est protégée au moyen d'un clapet postal qui est ouvert pour actionner la touche préaffectée pour entrer dans le mode spécial.

8. Procédé selon les revendications 1 à 7, **caractérisé en ce que** l'interprétateur en tant que routine spéciale qui est mémorisée dans l'OTP-ROM interne, est activé par une structure de données appliquée de l'extérieur via le socle EPROM externe, et coopère avec les parties de programme d'exploitation mémorisées dans l'OTP-ROM interne pour interpréter des données, une clé d'accès permettant respectivement l'accès au mode spécial correspondant et la structure de données comprenant des informations qui sont traitées par l'interprétation et la OTP interne à CPU exécutant des opérations qui se trouvent exclusivement dans la zone de codification du programme d'exploitation dans l'OTP-ROM interne.
